# EUROPEAN PATENT APPLICATION

(11) **EP 1 744 098 A1**
(43) Date of publication of application: **17.01.2007**
(21) Application number: 05734505.0
(22) Date of filing: 20.04.2005
(51) Int. Cl.: F21V 8/00, G02B 6/00, G02F 1/335

(54) **LIGHT SOURCE MODULE AND AREA LIGHT SOURCE**

(30) Priority: 26.04.2004 JP 2004129377
(71) Applicant: OMRON CORPORATION, Kyoto-shi, Kyoto 600-8530 (JP)
(72) Inventor: MAKUTA, Isao c/o OMRON CORPORATION, 801, Shimogyo-ku, Kyoto-shi, Kyoto 600-8530 (JP); SHINOHARA, Masayuki c/o OMRON CORPORATION, 801, Shimogyo-ku, Kyoto-shi, Kyoto 600-8530 (JP); TAKAGI, Junichi c/o OMRON CORPORATION, 801, Shimogyo-ku, Kyoto-shi,Kyoto 600-8530 (JP); MATOBA, Masato c/o OMRON CORPORATION, 801, Shimogyo-ku, Kyoto-shi, Kyoto 600-8530 (JP)
(74) Representative: Weihs, Bruno Konrad
(86) International application number: PCT/JP2005/007556
(87) International publication number: WO 2005/103561

(57) **Abstract**

A light source module (22) is provided with a light-emitting component (30) including a light-emitting diode. A light guide plate (23) for expanding a light beam from the light source module (22) into a planar shape and emitting the light beam from a light exit surface is attached to the light source module (22). For the attachment, a connection portion (32) for connecting a connected portion (27) of the light guide plate (23) and securing the light source module (22) to the light guide plate (23) is provided on the front of the light source module (22). At both ends of the light source module (22), connectors (39) for connecting a flexible printed board (38) without using solder are provided.

## Description

### Technical Field

The present invention relates to a light source module and a surface light source device. The invention particularly relates to a light source module for constructing a surface light source device in combination with a light guide plate.

### Background Art

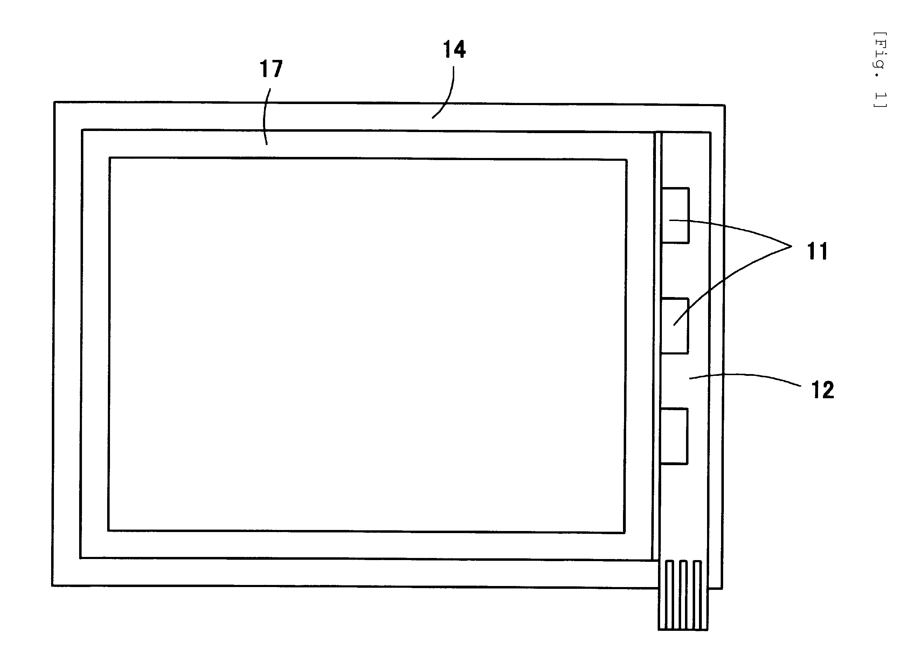

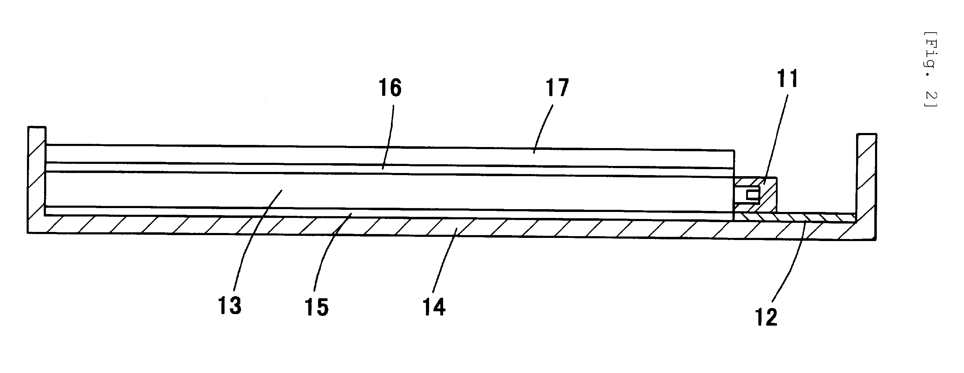

Fig. 1 is a plan view showing a conventional surface light source device. Fig. 2 is a cross-sectional view of this conventional surface light source device. In the conventional surface light source device, an LED (light emitting diode) is built in a light emitting part 11. One or plural light emitting parts 11 are mounted to a flexible print board 12 by soldering in advance. The flexible print board 12 is fixed to a light guide plate 13 by a caulking structure or an adhesive tape, etc. such that the light emitting part 11 abuts on an end face (light incident face) of the light guide plate 13. A reflecting sheet 15, the light guide plate 13, a diffusion plate 16 and a rim sheet 17 formed in a frame shape are overlapped and stored into a holder 14 formed in a shallow box shape and manufactured by synthetic resin. The flexible print board 12 is stored between the light guide plate 13 and an edge of the holder 14. This surface light source device is arranged on the rear face of a liquid crystal display panel, and is used as a backlight.

However, in the flexible print board among parts of such a surface light source device, various kinds of shapes and sizes are required every use and assembled product of a liquid crystal display device. For example, it is required to make the product compact that a drawing-around distance of the flexible print board is shortened as much as possible. Further, it is necessary to wire the flexible print board through clearances between other parts as much as possible. Therefore, the drawing-around distance and shape of the flexible print board are various every each product assembling the surface light source device thereinto.

Accordingly, in the conventional surface light source device in which the light emitting part is soldered to the flexible print board, the kind of the surface light source device is obliged to be many and various correspondingly to various kinds of flexible boards. When it is intended to satisfy such a request of a user, it is necessary to manufacture and stock various kinds of surface light source devices as products, or take an order receiving production system. In a method for preparing various kinds of surface light source devices as in the former case, cost is high since a scale of its manufacturing line, a stock space, a stock risk, etc. are increased. Further, a problem exists in that no product required in the user is necessarily found even when various kinds of surface light source devices are lined up.

Further, in a case for taking the order receiving production system as in the latter case, on the user side, a problem exists in that manufacturing lead time from ordering to delivery of the product is lengthened and product formation is delayed. For example, a flow from completion of a design of a new product of a portable telephone, etc. to the actual assembly of the new product will be briefly explained as follows. When the design of the new product of the portable telephone, etc. is completed, a maker (hereinafter called a user) of the portable telephone designs the shape of the flexible print board, the size of the light guide plate, emitting face brightness, etc. in accordance with this product. An order of the surface light source device is given to a maker of the surface light source device with this shape, etc. as a request specification. The surface light source device maker requires approval from the user by designing the flexible print board in detail in consideration of this request specification, a light emitting part manufactured by its own company, and the structure of the light guide plate. When the approval is obtained from the user, an order of the flexible print board is given to a manufacturing section or a manufacturing maker of the flexible print board. When parts such as the flexible print board, etc. are delivered, the surface light source device is manufactured by assembling these parts, and is inspected and is then delivered to the user. The user then assembles the portable telephone, etc. by using this surface light source device.

Here, a period from the ordering of the surface light source device to the actual delivery is long in comparison with a delivery period of another part for the portable telephone. This is because the period from the ordering of the flexible print board to the delivery is long. When the period until the delivery of the flexible print board is long in this way and it takes time until the detailed specification of the surface light source device is determined between the surface light source device maker and the user, the period until the delivery of the surface light source device is lengthened more and more. Therefore, a forwarding period of the product in the user is delayed. In particular, there is also a case in which a peripheral part such as the surface light source device is designed at a final stage of a designing work of the portable telephone, etc. In this case, part supply of the surface light source device is delayed more and more in comparison with the other parts.

Further, when there are a design change and a specification change of the flexible print board of the surface light source device, the maker of the portable telephone, etc. must also make the design change through the maker of the surface light source device every time so that required time is lengthened.

For example, patent literature 1 is known as a literature relating to the surface light source device mounting the LED to the flexible print board as mentioned above. Further, the surface light source device of another structure mounting the LED to the print board is disclosed in patent literature 2.

Patent literature 1: Japanese patent application No. 2003-204570
Patent literature 2: JP-A-2003-215546

### Disclosure of the Invention

### Problems that the Invention is to Solve

The invention is made in consideration of the above technical problems, and its object is to solve the above problems by arranging a connector for connecting a wiring substrate in the light source module.

### Means for Solving the Problems

The light source module in the invention comprises a light emitting element for emitting light and supplying this light to a light guide plate,
the light source module further comprising:
a connector for connecting a wiring member; and an electrically conductive base for conducting the connector and the light emitting element.

In the light source module in the present invention, the light emitting element and the wiring member of the flexible print board, etc. are separated. In the light source module having the light emitting element, the wiring member can be connected later by the connector. Accordingly, a product kind of the light source module can be reduced by separating the wiring member having various shapes in accordance with uses. Therefore, a stock amount of the light source module can be reduced, and a stock space can be reduced and a stock risk can be also reduced. Further, a user of a surface light source device can personally supply the wiring member and can connect the wiring member to the light source module. Accordingly, an obtaining period of the surface light source device can be shortened. In particular, a forwarding period of a new product can be hastened in the case of development of the new product.

In a certain embodiment mode of the light source module of the present invention, the above light emitting element is stored into the light emitting part, and this light emitting part is mounted to the above electrically conductive base. In such an embodiment mode, the light source module can be easily manufactured since the light emitting part sold at a market can be used.

When the above light emitting part is mounted onto a light emitting part mounting portion arranged in the above electrically conductive base, the height (thickness) of the light source module can be reduced by concavely arranging a light emitting part placing face of the above light emitting part mounting portion.

Further, when the above light emitting part and the above electrically conductive base are connected on a side face of the above light emitting part, it is possible to set the light emitting part so as not to be overlapped on the electrically conductive base, solder, etc. so that the height of the light source module can be reduced.

The above light emitting part can be also insert-molded within a housing manufactured by synthetic resin. The light source module is easily assembled by inserting the light emitting part.

In another embodiment of the present invention, the light emitting element is mounted onto the electrically conductive base, and is insert-molded within a housing manufactured by synthetic resin. In accordance with this embodiment mode, since the light emitting element such as an LED, etc. is directly mounted onto the electrically conductive base, the number of assembly works of the light source module is reduced and the light source module can be made compact and thin.

Further, if the above light emitting element is sealed and molded within a transparent resin portion at this time and is then insert-molded into the housing, light of the light emitting element can be easily taken out to the exterior.

In still another embodiment of the present invention, the wiring member connected to the above connector can be released. Accordingly, even after the wiring member is connected to the connector, the wiring member can be again detached from the connector, and the light source module and the surface light source device can be repaired and reutilized.

In still another embodiment of the present invention, a light emitting part storing portion for storing the light emitting part is arranged, and a positioning face for positioning forward and backward directions of the light emitting part by abutting one portion of a front face of the light emitting part is arranged within the light emitting part storing portion. Accordingly, the light emitting part can be precisely positioned by abutting the light emitting part on the positioning face.

A surface light source device in the invention comprises:
the light source module in the present invention; and
a light guide plate for introducing light emitted from the light source module from a light incident face, and spreading this light in a face shape, and emitting this light from a light emitting face.

In the surface light source device of the present invention, the light emitting element and the wiring member of the flexible print board, etc. are separated. In the light source module having the light emitting element, the wiring member can be connected later by the connector. Accordingly, a product kind of the surface light source device can be reduced by separating the wiring member having various shapes in accordance with uses. Therefore, a stock amount of the surface light source device can be reduced and a stock space can be reduced and a stock risk can be also reduced. Further, a user of the surface light source device can personally supply the wiring member and can connect the wiring member to the light source module so that an obtaining period of the surface light source device can be shortened. In particular, a forwarding period of a new product can be hastened in the case of development of the new product.

In a certain embodiment mode of the surface light source device of the present invention, a connecting portion is arranged in the light source module, and a connected portion connected to the connecting portion is arranged in the light guide plate, and the light source module is fixed to the light guide plate by connecting the connecting portion and the connected portion. Accordingly, the light guide plate and the light source module can be easily assembled. Further, the light guide plate and the light source module can be easily positioned.

In still another embodiment mode of the surface light source device of the present invention, positioning means for mutually positioning the light source module and the light guide plate is arranged. Accordingly, the light source module can be precisely positioned.

In particular, if the distance between the light emitting face of the light source module and the light incident face of the light guide plate is set to 0.05 mm or less after the positioning of the light guide plate and the light source module, a reduction of central brightness of the surface light source device can be reduced and brightness irregularity can be also reduced.

In still another embodiment mode of the surface light source device of the present invention, the light guide plate has a pattern for emitting light from the light emitting face by reflecting light internally guided, and the pattern is arranged on a concentric circle with a certain point as a center. If such a pattern is used, the brightness of light emitted from the light emitting face can be raised and utilization efficiency of light can be improved even in the case of a so-called point light source for locally locating the light emitting element in a narrow area.

The constructional elements explained above in the invention can be arbitrarily combined as much as possible.

### Brief Description of the Drawings

Fig. 1 is a plan view showing a conventional surface light source device.
Fig. 2 is a cross-sectional view of the surface light source device shown in Fig. 1.
Fig. 3 is a perspective view showing a surface light source device in accordance with one embodiment of the present invention.
Fig. 4 is an exploded perspective view of the surface light source device shown in Fig. 3.
Fig. 5 is a perspective view from the front face side of a light source module in accordance with one embodiment of the present invention.
Fig. 6 is a perspective view from the rear face side of the light source module shown in Fig. 5.
Fig. 7 is a perspective view of a contact used in the light source module shown in Fig. 5.
Fig. 8(a) is a plan view of the contact shown in Fig. 7, and Fig. 8(b) is its front view.
Fig. 9 is a perspective view showing the structure of a light emitting part.
Fig. 10 is a plan view showing the light emitting part mounted to a housing in the light source module shown in Fig. 5.
Fig. 11 (a) is a cross-sectional view of line X-X of Fig. 10, and Fig. 11(b) is a cross-sectional view of line Y-Y of Fig. 10.
Fig. 12 is a partially broken plan view showing the light source module attached to a light guide plate.
Fig. 13 is a view showing the magnitude of brightness irregularity on a light emitting face of the light guide plate and a change of central relative brightness of the light emitting face when a separating distance d between a light incident portion and the light emitting part is changed.
Fig. 14 is a perspective view showing a rising state of a connector knob.
Fig. 15 (a) is a schematic view showing a state in which the connector knob is raised and a portion between clips is opened. Fig. 15 (b) is a schematic view showing a state in which a flexible print board is inserted between the clips. Fig. 15 (c) is a schematic view showing an intermediate state in which the connector knob is slantingly brought down and the portion between the clips is closed. Fig. 15(d) is a schematic view showing a state in which the connector knob is horizontally brought down and the flexible print board is fixed between the clips.
Figs. 16(a) to 16(d) are plan views for explaining an assembly procedure of the light source module.
Fig. 17 is a circuit diagram showing a circuit construction of the light source module.
Fig. 18 is a view showing results in which the relation of a conducting electric current and a temperature rise ΔT is measured when an electric current is flowed to the flexible print board sticking a copper foil of 35 µm in thickness and is flowed to a copper foil of 100 µm in thickness.
Fig. 19 is a view showing the construction of the flexible print board when a conventional surface light source device and a liquid crystal display panel are combined.
Fig. 20(a) is a plan view of the flexible print board able to be used in combining the surface light source device in accordance with one embodiment of the invention and the liquid crystal display panel. Fig. 20 (b) is a schematic side view of the surface light source device and the liquid crystal display panel.
Fig. 21 is a perspective view showing a modified example of the light source module of Fig. 5.
Fig. 22 is a circuit diagram showing a circuit construction of the light source module shown in Fig. 21.
Fig. 23 is a plan view showing a surface light source device in accordance with another embodiment of the present invention.
Fig. 24 is a view for enlarging one portion of Fig. 23.
Figs. 25 (a) and 25 (b) are a plan view and a front view showing the vicinity of a light incident portion of a light guide plate used in the surface light source device of Fig. 23. Figs. 25 (c) and 25 (d) are a rear view and a plan view of the light source module.
Fig. 26 (a) is a schematic plan view showing the internal structure of a light source module in accordance with still another embodiment of the present invention. Fig. 26(b) is a schematic sectional view of this light source module.
Fig. 27 is a schematic view for explaining the construction of a light source module in accordance with still another embodiment of the present invention.

### Description of the Reference Numerals and Signs

- 21: surface light source device
- 22: light source module
- 23: light guide plate
- 27: connected portion
- 28: light incident portion
- 30: light emitting part
- 31: pushing-against portion
- 32: connecting portion
- 34: contact
- 34A, 34B: contact parts
- 35: housing
- 36: connector knob
- 37: Zener diode
- 38: flexible print board
- 39: connector
- 52: solder
- 58: substrate insertion port
- 61A, 61B: clip
- 62: lever
- 68: liquid crystal display panel

### Best Mode for Carrying Out the Invention

Embodiments of the invention will next be explained in detail in accordance with the drawings. However, the invention is not limited to the following embodiments.

### Embodiment 1

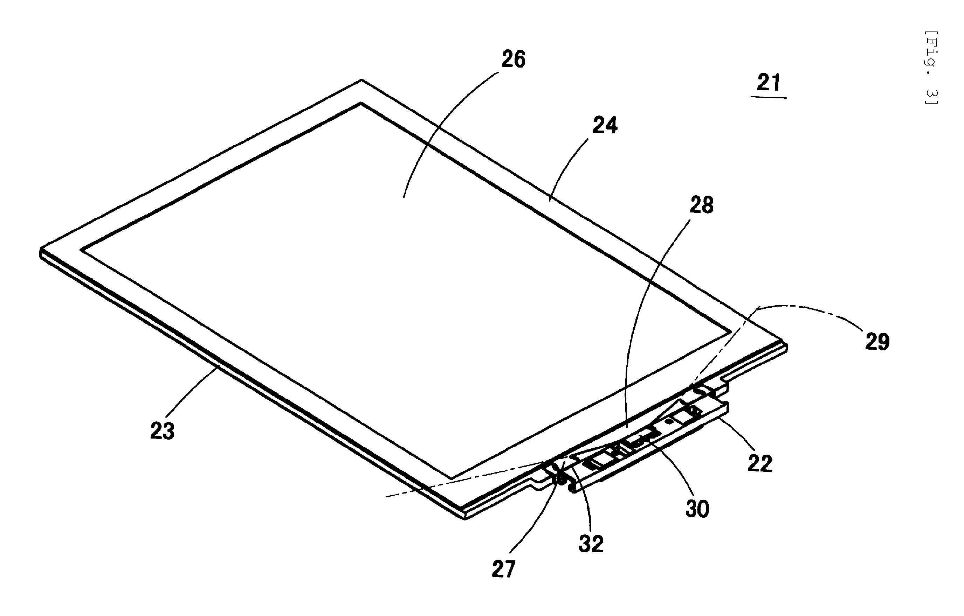

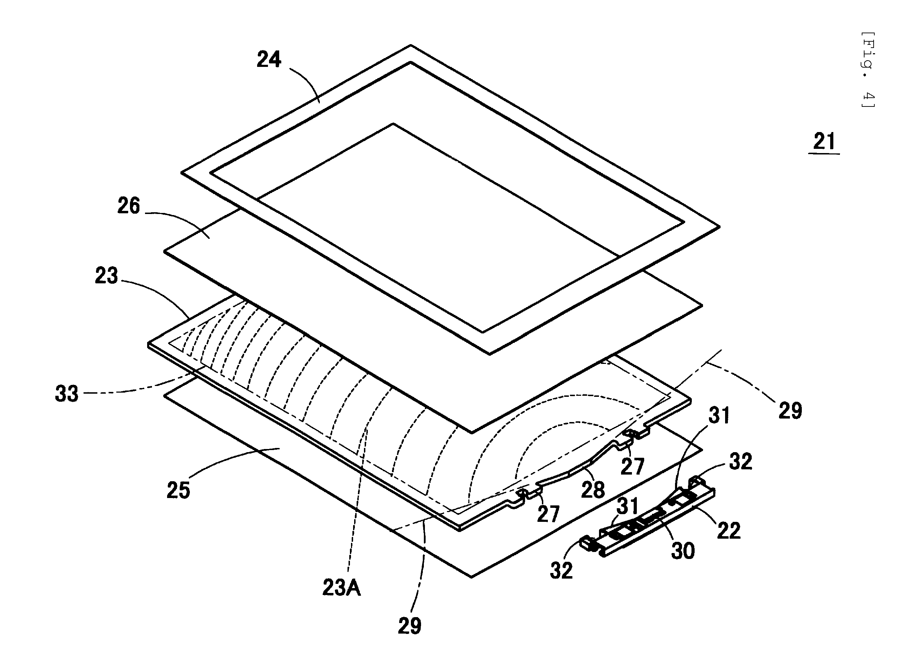

Fig. 3 is a perspective view showing a surface light source device 21 in accordance with one embodiment of the present invention. Fig. 4 is its exploded perspective view. This surface light source device 21 is constructed by a light source module 22, a light guide plate 23, a rim sheet 24, etc. The light guide plate 23 is formed by a transparent resin material of a high refractive index such as polymethyl methacrylate, polycarbonate resin, etc. A pattern 23A for reflecting light guided within the light guide plate 23 and emitting this light from an upper face (light emitting face) is formed on a lower face of the light guide plate 23. In the pattern, many fine irregularities formed in the shape of a triangular prism are arranged on the lower face of the light guide plate 23. Each pattern is arranged on a concentric circle with a light emitting point of the light source module 22 as about a center. Pattern density is small in an area near the light source module 22. Pattern density is gradually increased as it becomes distant from the light source module 22. Thus, brightness on the upper face of the light guide plate 23 is uniformed.

Accordingly, light emitted from the light source module 22 is incident into the light guide plate 23 from a side face (light incident face) of the light guide plate 23. While this light is guided within the light guide plate 23, this light is emitted from the upper face little by little, and is approximately uniformly emitted from the upper face of the light guide plate 23. The rim sheet 24 is formed in a frame shape, and covers a peripheral portion of the upper face of the light guide plate 23, particularly, an area in which no pattern is formed on the lower face of the light guide plate 23. A reflecting sheet 25 is arranged on the lower face of the light guide plate 23 in accordance with necessity. A diffusion sheet 26, a prism sheet, etc. are arranged between the light guide plate 23 and the rim sheet 24 in accordance with necessity.

A pair of connected portions 27 having a thin base portion and a wide tip portion are arranged on an end face of the light guide plate 23. A light incident portion 28 formed in a trapezoidal shape is arranged between the connected portions 27. In the light incident portion 28, its central portion is set to a light incident face, and slanting faces are formed on both sides of this central portion. In a planar view, extension lines 29 (shown by a one-dotted chain line in Figs. 3 and 4) of both side slanting faces of the connected portion 27 pass the outside from a corner of an inner circumferential face of the rim sheet 24, and the inside from a corner of an area 33 (this is called a pattern forming area and is shown by a two-dotted chain line in Fig. 4) forming the pattern of the lower face of the light guide plate 23. Thus, light incident from the light incident face toward the outside from the pattern forming area 33 is reflected on the slanting face of the connected portion 27 and is collected in the pattern forming area 33 and loss of the light is reduced.

On the other hand, a central portion of the front face of the light source module 22 is recessed in a trapezoidal shape, and a light emitting part 30 is mounted to its center. Pushing-against portions 31 approximately formed in a trapezoidal shape are respectively projected forwards on both sides of the light emitting part 30. A connecting portion 32 narrow in an inlet and wide in the interior is concavely arranged in an end portion of the pushing-against portion 31.

The connected portion 27 of the light guide plate 23 is fitted into the connecting portion 32 of the light source module 22 from above. Thus, as shown in Fig. 3, the light guide plate 23 and the light source module 22 are connected and integrated. At this time, the corners of edges of the upper face side of the connecting portion 32 are cut and removed so as to easily fit the connected portion 27 to the connecting portion 32. The light incident portion 28 of the light guide plate 23 is fitted between the pushing-against portions 31 of the light source module 22, and a slanting face of the pushing-against portion 31 comes in press contact with a slanting face of the light incident portion 28. Further, in a state in which the connecting portion 32 and the connected portion 27 are connected and the light source module 22 is fixed to a side face of the light guide plate 23, a front face of the light emitting part 30 is opposed to the light incident portion 28 of the light guide plate 23.

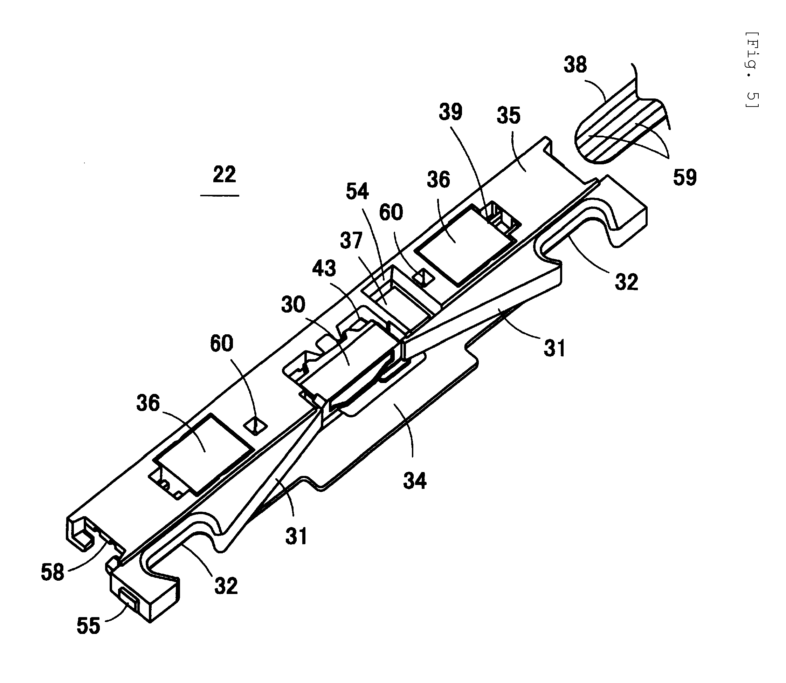

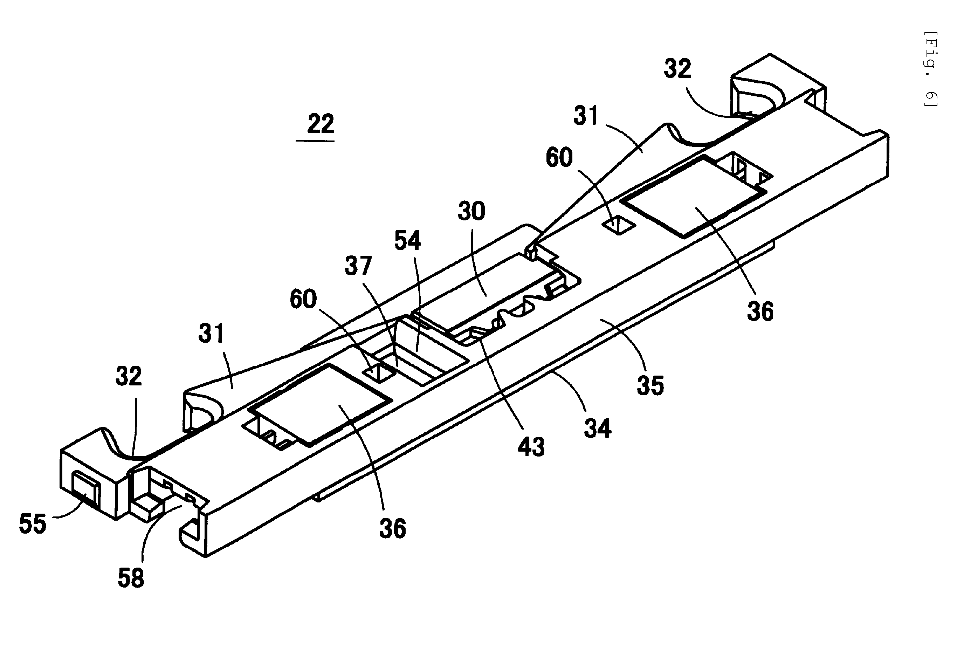

Fig. 5 is a perspective view from the front face side of the light source module 22. Fig. 6 is a perspective view from the rear face side of the light source module 22. The light source module 22 is constructed by a contact (electrically conductive base) 34 formed by an electrically conductive material, a housing 35 manufactured by synthetic resin, a connector knob 36, the light emitting part 30 and a Zener diode 37. The housing 35 is attached to the contact 34, and the connector knob 36 is rotatably attached to the housing 35. The light emitting part 30 and the Zener diode 37 are mounted to the contact 34.

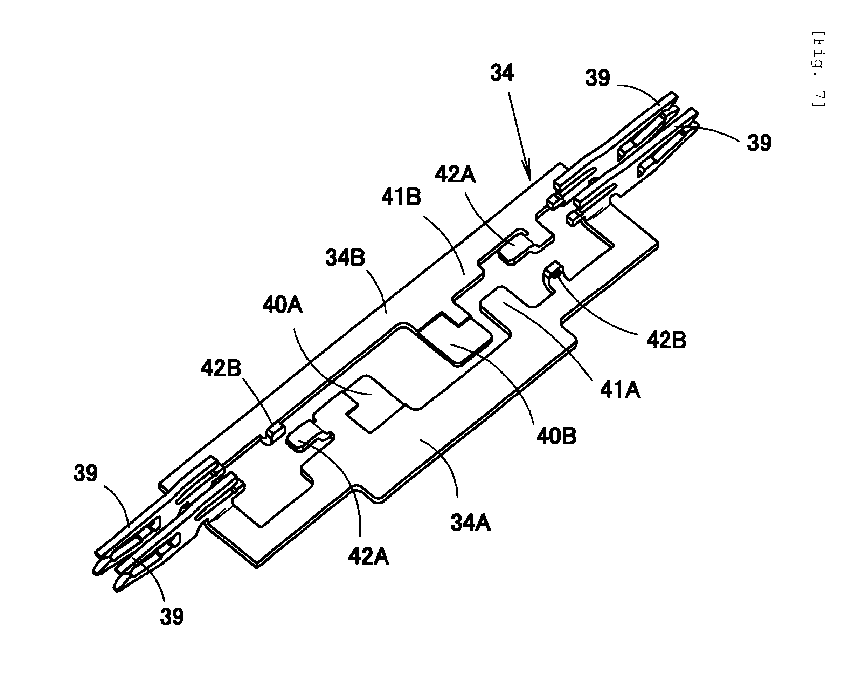

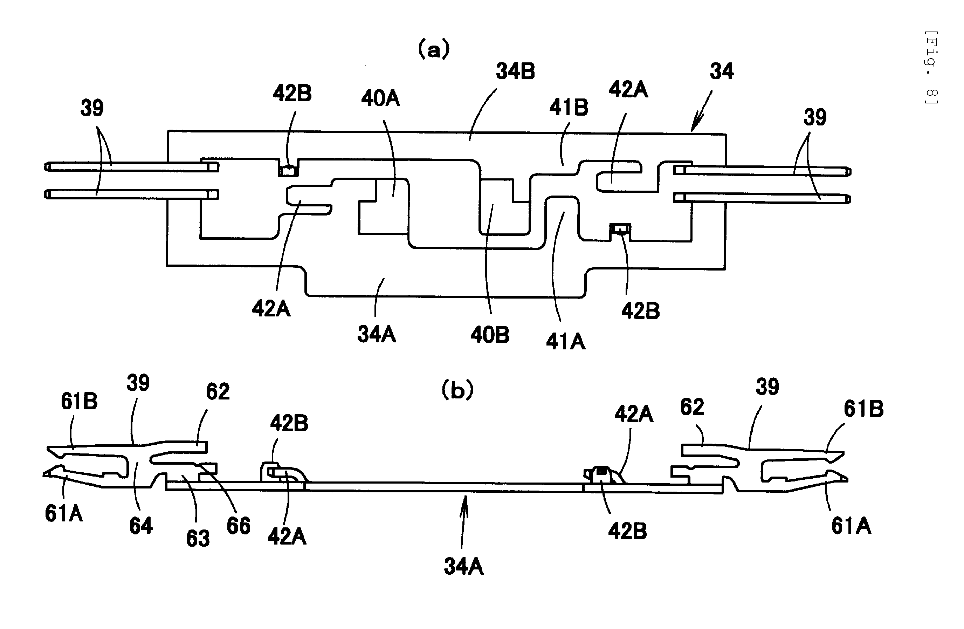

First, the structure of the contact 34 will be explained. Fig. 7 is a perspective view of the contact 34. Figs. 8(a) and 8(b) are a plan view and a front view of the contact 34. The contact 34 is constructed by first contact parts 34A and second contact parts 34B spaced and approximately arranged in parallel. Each of the first contact parts 34A and the second contact parts 34B is molded by press-working a metallic plate. A connector 39 is arranged in each of both end portions of both the contact parts 34A, 34B. The connector 39 is arranged to electrically connect each of the contact parts 34A, 34B to wiring of the flexible print board 38 by gripping the flexible print board 38. A connector 39 is arranged in only one of the left and right contacts 34, and the contact 34 may be also divided into a type for connecting the flexible print board 38 on the right-hand side, and a type for connecting the flexible print board 38 on the left-hand side. However, the kind of a product can be reduced by arranging the connectors 39 on both the sides as shown in Fig. 7.

In both the contact parts 34A, 34B, light emitting part mounting portions 40A, 40B for mounting the light emitting part 30 are respectively arranged so as to be opposed leftward and rightward. Further, in both the contact parts 34A, 34B, Zener diode mounting portions 41A, 41B for mounting the Zener diode 37 are arranged so as to be opposed forward and backward. In the light emitting part mounting portions 40A, 40B, the thickness of a plate is thinned by hollowing an upper face. This construction is set so as to reduce the height (thickness) of the light source module 22 by mounting the light emitting part 30 to a thin portion of the plate thickness. Reference numerals 42A, 42B designate two sets of engaging pieces for attaching the housing 35 to both the contact parts 34A, 34B. The engaging pieces 42A, 42B are set to a structure for assembling the housing 35 in one touch. However, the housing 35 may be also attached by using a screw, etc.

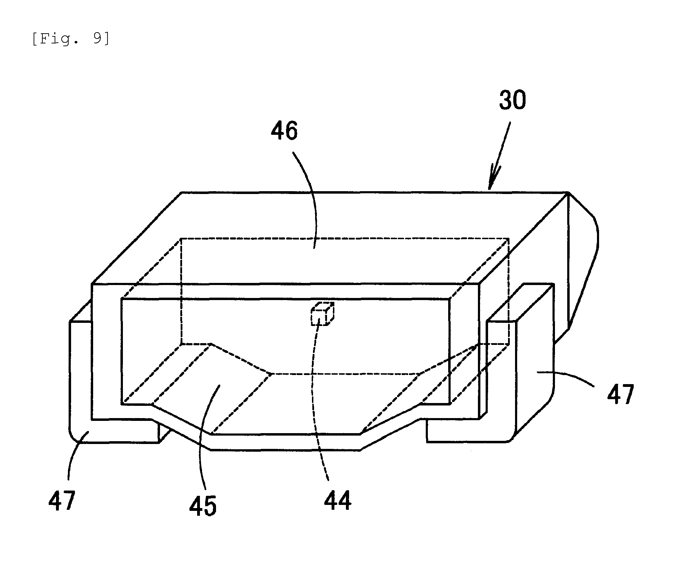

A concave portion opened forward and vertically, i.e., a light emitting part storing portion 43 is arranged in a central portion of the housing 35 attached onto the contact 34. The light emitting part 30 is collected within the light emitting part storing portion 43, and is mounted to the contact 34. Fig. 9 is a perspective view showing the structure of the light emitting part 30. In the light emitting part 30, a light emitting element 44 (bear chip) such as an LED, etc. is sealed within a transparent resin portion 45, and upper, lower, left and right faces and a rear face of the transparent resin portion 45 are covered with a covering portion 46 constructed by white resin, and a front face (light emitting face) of the transparent resin portion 45 is exposed from the covering portion 46. Further, external terminals 47 each approximately formed in an L-shape from a side face to a lower face are arranged on both left and right sides of the covering portion 46. Both the external terminals 47 are electrically conducted to both electrodes of the light emitting element 44.

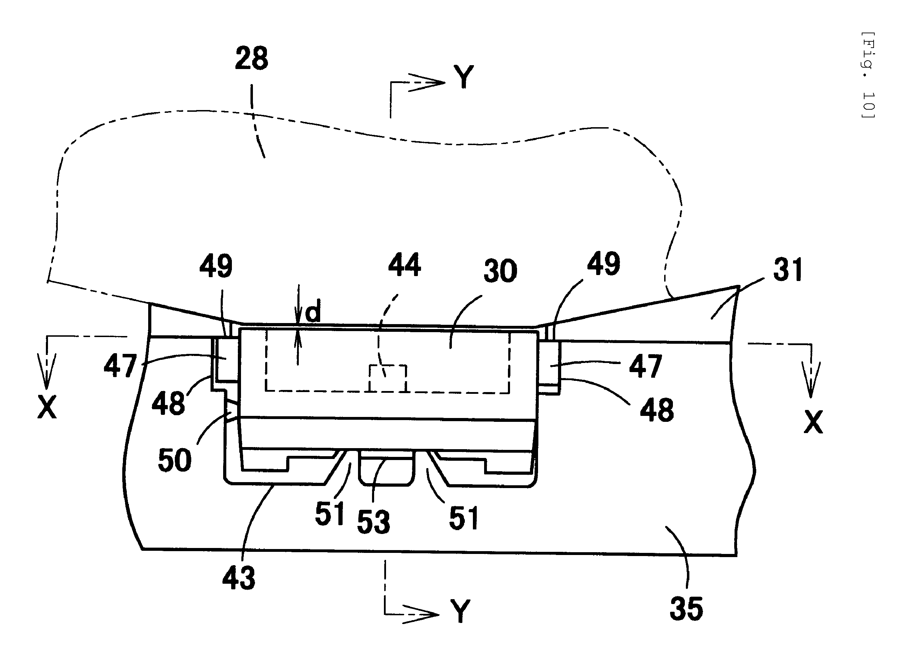

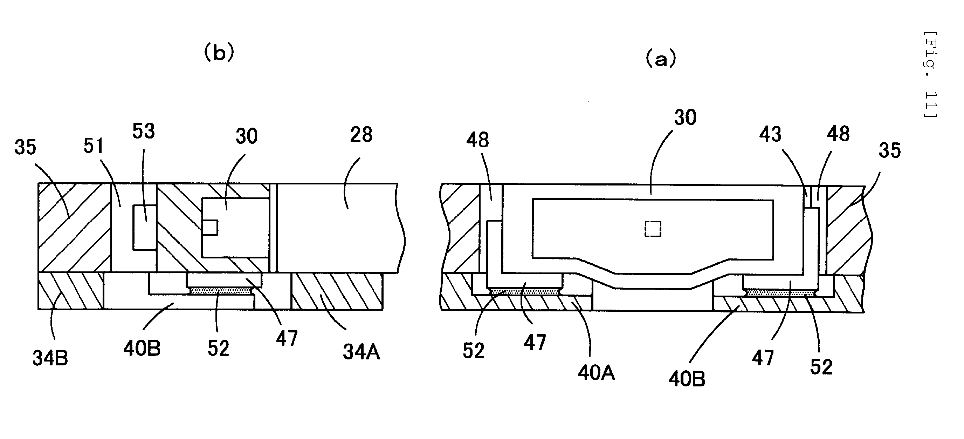

Fig. 10 is a plan view showing the light emitting part 30 mounted to the housing 35. Fig. 11 (a) is a cross-sectional view of line X-X of Fig. 10. Fig. 11 (b) is a cross-sectional view of line Y-Y of Fig. 10. Concave portions 48 are formed on both side faces of the light emitting part storing portion 43. A front face of the concave portion 48 is set to a positioning face 49. Further, a convex portion 50 is projected on one side face within the concave portion 48. Apair of convex curve portions 51 are formed on a rear face within the concave portion 48.

When the light emitting part 3 is pushed into this light emitting part storing portion 43 from above, the external terminal 47 of the light emitting part 30 rides onto the thin portion of the plate thickness of the light emitting part mounting portions 40A, 40B. Accordingly, as shown in Fig. 11, the light emitting part 30 is connected to the contact 34 by joining the light emitting part mounting portions 40A, 40B and the lower face of the external terminal 47 by solder 52. Further, a convex portion 50 is pushed against one side face of the light emitting part 30 so that the other side face of the light emitting part 30 is pushed against a side face of the light emitting part storing portion 43. Thus, backlash of the left and right directions of the light emitting part 30 is prevented, and the light emitting part 30 is positioned in the left and right directions within the light emitting part storing portion 43. Further, the front face of the external terminal 47 is pushed against a positioning face 49 by pushing a convex curve portion 51 against the rear face of the light emitting part 30. Thus, backlash of the forward and backward directions of the light emitting part 30 is prevented, and the light emitting part 30 is positioned in the forward and backward directions within the light emitting part storing portion 43. At this time, a convex portion 53 arranged on the rear face of the light emitting part 30 is fitted between the convex curve portions 51.

Further, a Zener diode storing portion 54 for storing the Zener diode 37 is opened in the housing 35. The Zener diode mounting portions 41A, 41B are exposed from the Zener diode storing portion 54. Accordingly, the Zener diode 37 is mounted to the contact 34 by storing the Zener diode 37 into this Zener diode storing portion 54 and soldering the Zener diode 37 to the Zener diode mounting portions 41A, 41B.

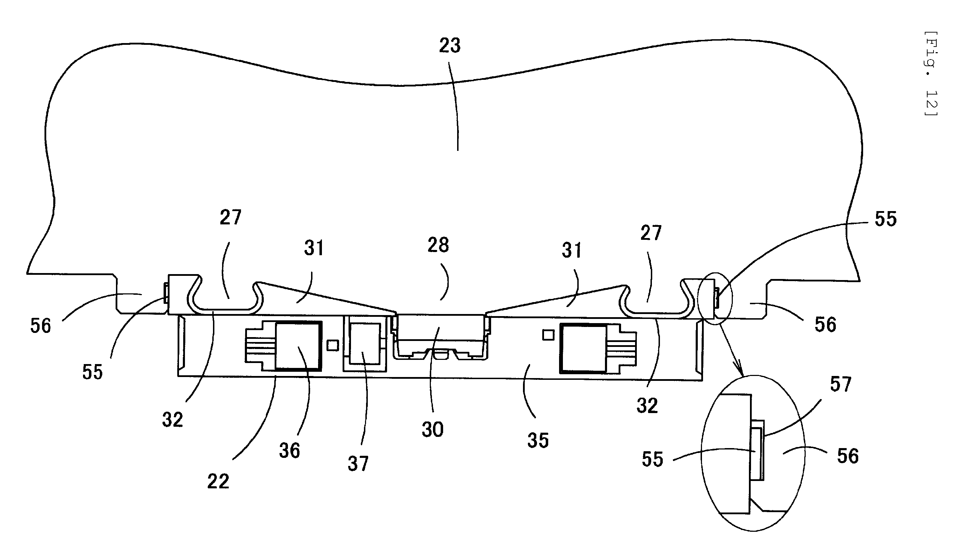

Fig. 12 shows the light source module 22 attached to the light guide plate 23. Front faces of the pushing-against portions 31 arranged on both sides of the light emitting part storing portion 43 have the same inclination as the slanting face of the light incident portion 28 of the light guide plate 23. Accordingly, when the connected portion 27 of the light guide plate 23 is pushed into the connecting portion 32 arranged in the pushing-against portion 31 and the connecting portion 32 and the connected portion 27 are engaged, as shown in Fig. 10, the light source module 22 is pulled to the light guide plate 23 and the front face of the pushing-against portion 31 comes in press contact with the slanting face of the light incident portion 28. Thus, the front face of the pushing-against portion 31 and the slanting face of the light incident portion 28 come in press contact so that the light source module 22 is positioned in the left and right directions. Accordingly, the light emitting part 30 is positioned such that the center of the light emitting part 30 positioned within the light emitting part storing portion 43 and the center of the front face (light incident face) of the light incident portion 28 are conformed. Further, the light source module 22 can be precisely positioned in its rotating direction with respect to the light guide plate 23.

Thus, the light source module 22 is also positioned in the forward and backward directions with respect to the light guide plate 23 by attaching the light source module 22. In the light emitting part 30, the front face of the external terminal 47 is pushed against the positioning face 49 and is positioned in the forward and backward directions. Accordingly, the distance d between the front face of the light incident portion 28 and the front face of the light emitting part 30 shown in Fig. 10 is also held to a predetermined distance.

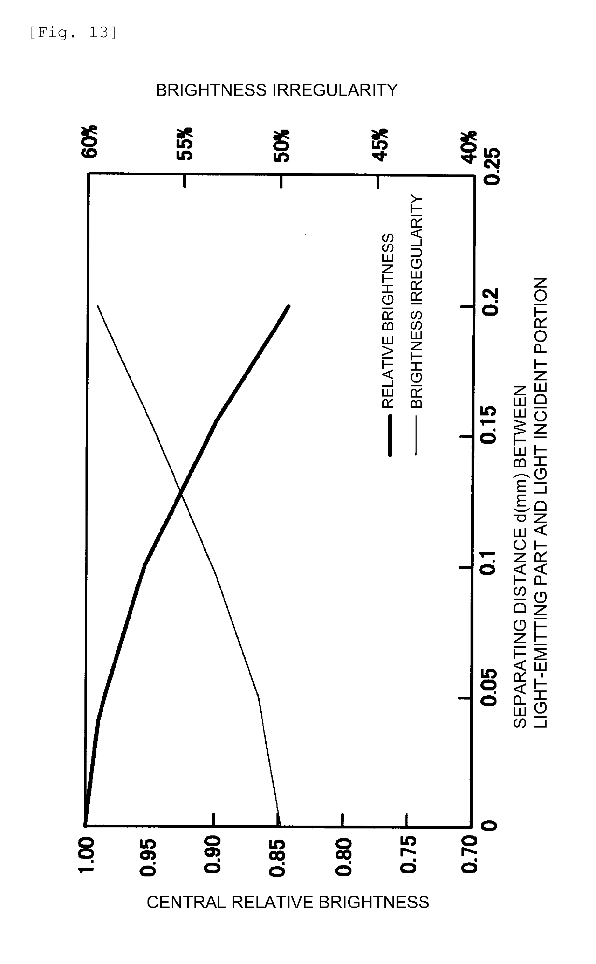

Fig. 13 shows the magnitude of brightness irregularity (dispersion of brightness) on the light emitting face of the light guide plate 23 and a change of central relative brightness of the light emitting face when the distance d (called a separating distance) between the front face of the light incident portion 28 and the front face of the light emitting part 30 is changed. As shown here, when the separating distance d is increased, the central relative brightness on the light emitting face of the light guide plate 23 is reduced and the brightness irregularity is increased. In particular, in accordance with Fig. 13, when the separating distance d becomes greater than 0.05 mm, the reduction of the central relative brightness and the brightness irregularity are suddenly increased. Accordingly, it is desirable to set the separating distance d to 0.05 mm or less. On the other hand, when the front face of the light incident portion 28 and the front face of the light emitting part 30 come in contact, there is a fear that an interference fringe is generated. Accordingly, in accordance with the structure as shown in this embodiment, it is desirable to hold this separating distance d to 0.05 mm or less without making the front face of the light incident portion 28 and the front face of the light emitting part 30 come in contact.

Further, as shown in Figs. 5 and 6, an engaging convex portion 55 is projected on a side end face of the pushing-against portion 31. On the other hand, as shown in Fig. 12, each projecting portion 56 is arranged outside the connected portion 27 in the light guide plate 23, and a concave portion 57 is concavely arranged on an inside face of the projecting portion 56. As enlargedly shown within a circle of Fig. 12, the engaging convex portion 55 abuts on a front face of the concave portion 57 so that an end portion of the pushing-against portion 31 is pulled on the light guide plate 23 side.

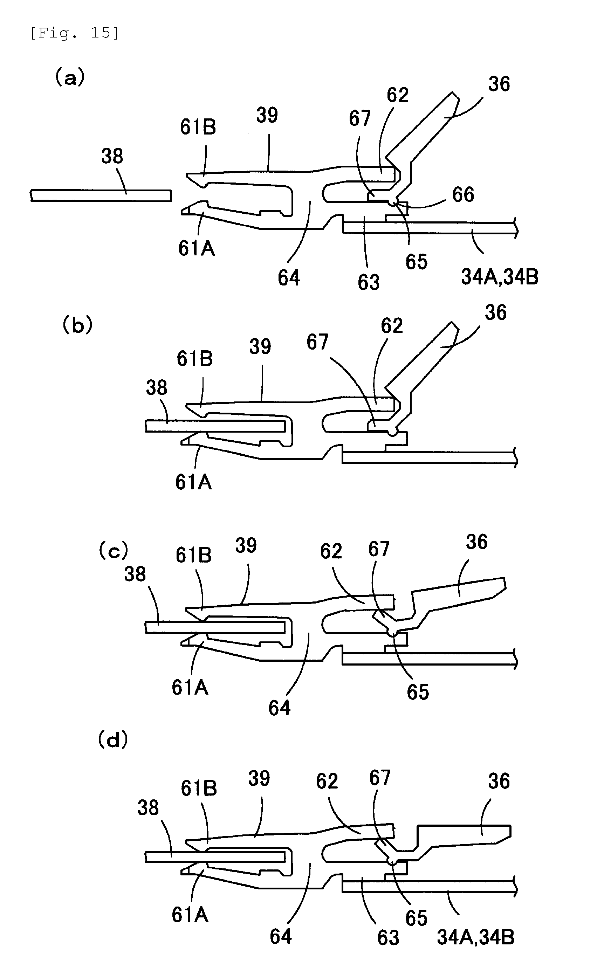

As shown in Figs. 5 and 6, a substrate insertion port 58 for inserting and connecting the flexible print board 38 to the connector 39 is opened in each of both end portions of the housing 35. As shown in Fig. 8(b), the connector 39 has a pair of clips 61A, 61B and a lever 62. One clip 61A is fixed to contact parts 34A, 34B through a support portion 63. A base portion of the other clip 61B is supported by a fulcrum portion 64, and the lever 62 is extended out of the base portion of the clip 61B. When no load is applied to the lever 62, the clearance between the clips 61A, 62B is greater than the thickness of the flexible print board 38. When the lever 62 is pushed up, the tip of the clip 61B is lowered downward and the clearance between the clips 61A, 31B is narrowed (see Fig. 15) .

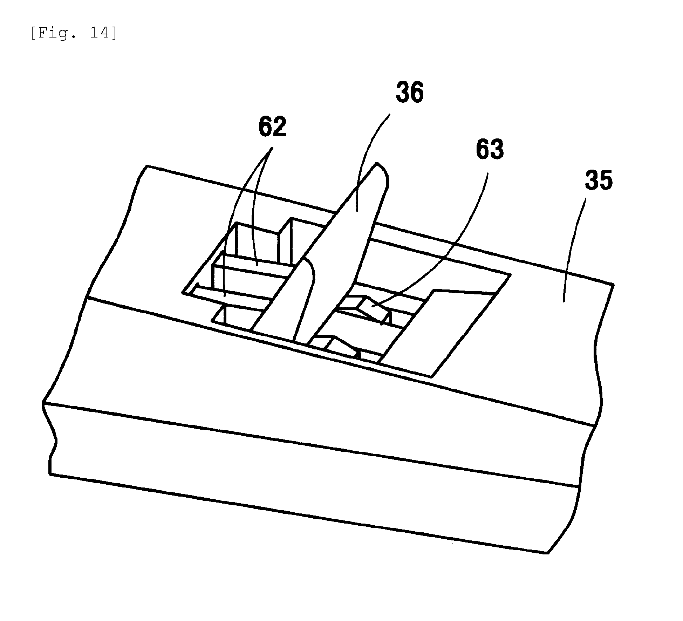

The connector 39 is opened and closed by the connector knob 36. The connector knob 36 is arranged on the upper face of the housing 35, and can be raised up by a tool such as a screwdriver, etc. as shown in Fig. 14. In a raising-up state of the connector knob 36, the portion between the clips 61A, 61b of the connector 39 is opened. In a bringing-down state of the connector knob 36, the portion between the clips 61A, 61B is closed. Figs. 15(a), 15(b), 15 (c) and 15 (d) are schematic views showing this mechanism. In the connector knob 36, a shaft portion 65 is rotatably supported by a groove portion 66 of a semi-circular shape arranged on the upper face of a support portion 63 of the connector 39. A base portion of the connector knob 36 is set to an acting portion 67 approximately curved or bent in an arc shape in section. The tip of the acting portion 67 is opposed to a lower face of the lever 62. Further, the shaft portion 65 is arranged on an outside face of the acting portion 67.

As shown in Fig. 15(a), in a raising-up state of the connector knob 36, the portion between the clips 61A, 61B is opened since the acting portion 67 is separated from the lever 62. At this time, as shown in Fig. 15(b), when the flexible print board 38 is inserted from the substrate insertion port 58, the flexible print board 38 enters the portion between the clips 61A, 61B.

When the connector knob 36 is next brought down, as shown in Fig. 15 (c), the connector knob 36 is rotated with the shaft portion 65 as a center, and the tip of the acting portion 67 hits against a lower face of the lever 62. Further, when the connector knob 36 is pushed down until the connector knob 36 becomes horizontal, the lever 62 is pushed up by the acting portion 67 so that the tip of the clip 61B is lowered with the fulcrum portion 64 as a fulcrum. As its result, as shown in Fig. 15 (d), the portion between the clips 61A, 61B is closed and the flexible print board 38 is grasped between the clips 61A, 61B. Further, wiring 59 of the flexible print board 38 and each of the contact parts 34A, 34B are electrically connected. A surface light source device 21 is then completed by connecting the flexible print board 38 to the light source module 22 attached to the light guide plate 23. Reference numeral 60 shown in Fig. 5 or 6 designates a hole for detaching engaging pieces 42A, 42B from the housing 35 by inserting a tool.

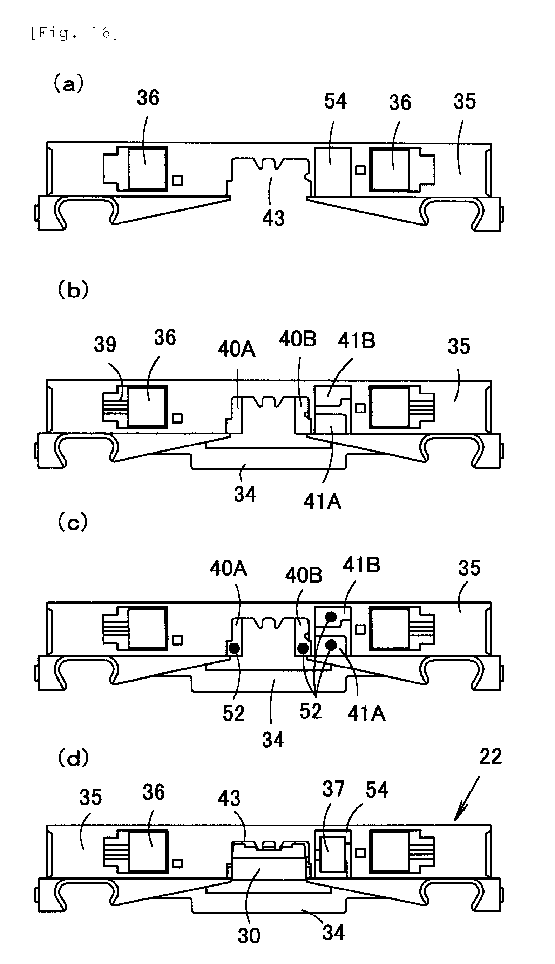

An assembly procedure of the above light source module 22 will next be explained by Figs. 16 (a) to 16 (d) . First, the connector knob 36 is attached to the housing 35 (Fig. 16 (a)). Thereafter, the contact 34 (contact parts 34A, 34B) is attached to the lower face of the housing 35 (Fig. 16 (b)). Next, solder 52 is coated on the light emitting part mounting portions 40A, 40B of the contact 34 and the Zener diode mounting portions 41A, 41B (Fig. 16(c)). The light emitting part 30 is then fitted into the light emitting part storing portion 43, and is overlapped on the light emitting part mounting portions 40A, 40B. Further, the Zener diode 37 is stored into the Zener diode storing portion 54, and is overlapped on the Zener diode mounting portions 41A, 41B. Thereafter, the light source module 22 is put into a reflow furnace, and solder 52 is reflowed and the light emitting part 30 and the Zener diode 37 are mounted to the contact 34 (Fig. 16(d)).

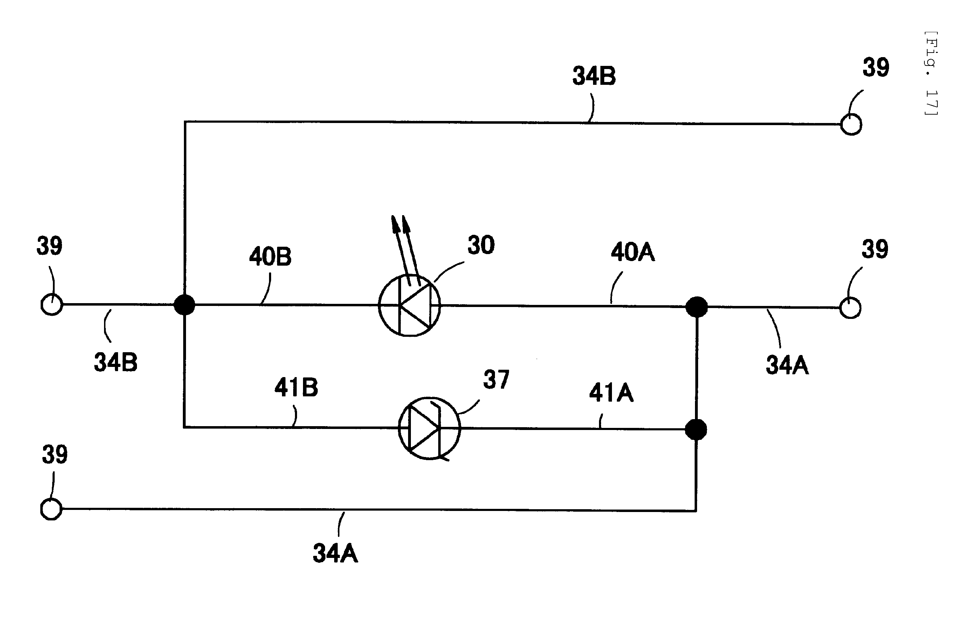

Fig. 17 is a view showing a circuit construction of the light source module 22 completed in this way. The light emitting part 30 and the Zener diode 37 are connected in parallel between the contact parts 34A, 34B, and two connectors 39 are respectively pulled out of the contact parts 34A, 34B, and a connector pair of the right side and a connector pair of the left side are constructed. Accordingly, the flexible print board 38 can be connected to the connector 39 located on the right side, and can be also connected to the connector 39 located on the left side. Further, the Zener diode 37 is connected to the light emitting part 30 in parallel. Accordingly, when an overcurrent, a surge electric current, etc. are flowed-in from the connector 39, the overcurrent, etc. are flowed to the Zener diode 37 so that the light emitting part 30 can be protected.

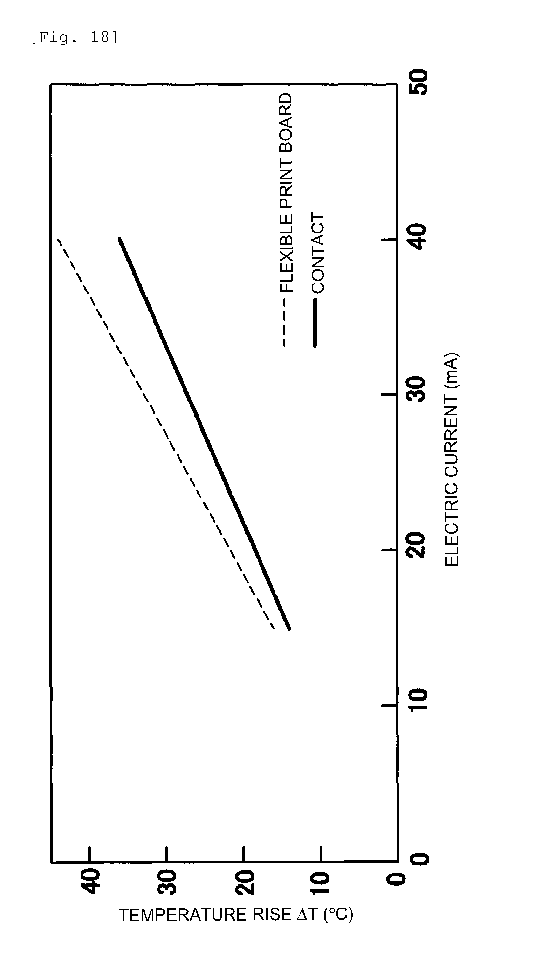

Further, the contact 34 constructed by a metallic plate is used in this light source module 22. Accordingly, a heat radiating property becomes preferable in comparison with a conventional example for mounting the light emitting part onto the flexible print board. Fig. 18 is a view showing results in which the relation of a conducting electric current and a temperature rise ΔT is measured when the electric current is flowed to the flexible print board formed by sticking a copper foil of 35 µm in thickness, and is flowed to a copper foil of 100 µm in thickness. Thus, a heat radiating effect is more excellent in the copper foil thicker than the flexible board. Accordingly, the heat radiating property can be preferably set by using the contact 34 constructed by a metallic plate as in this embodiment, and the temperature rise of the light source module 22 can be restrained.

In the surface light source device 21 of this embodiment, the light emitting part 30 and the flexible print board 38 are separated, and can be connected by the connector 39 arranged in the light source module 22. Accordingly, the flexible print board 38 according to a specification required in the surface light source device can be connected to the light source module 22. Accordingly, it is sufficient to merely manufacture many kinds of flexible print boards 38 or set order receiving production. Thus, it is possible to commonize the surface light source device 21 except for the light source module 22 or the flexible print board 38. It is also possible to reduce the kinds of light source modules 22 and surface light source devices 21 and the number of stocks and reduce a stock risk of the light source module 22, etc.

Further, it is possible to shorten lead time from development of a new product using the liquid crystal display panel, etc. to product forwarding by using this light source module 22 in a user of the surface light source device 21. For example, when the user designs the new product of a portable telephone, etc., the user designs the shape of the flexible print board 38 by considering data (particularly, a specification for connecting the connector 39) of the light source module 22 publicly announced from a surface light source device maker. Then, the flexible print board 38 is internally manufactured, or an order is directly given to a maker of the flexible print board 38. Further, an order of the surface light source device 21 removing the flexible print board 38 is given to the surface light source device maker by designating the size of the light guide plate 23, etc. Thus, in the surface light source device maker, it is not necessary to design the flexible print board 38 in detail and manufacture this flexible print board 38 so that the appointed date of delivery can be extremely shortened. Further, it is not necessary for the user to arrange a matter with the surface light source device maker so as to determine details of the flexible print board 38, and the order of the flexible print board 38 can be rapidly given. Accordingly, the lead time until the forwarding of the new product can be also shortened even when a work for connecting the light source module 22 and the flexible print board 38 is required on the user side.

Further, it is possible to separate the light emitting part 30 and the flexible print board 38 and connect only the flexible print board 38 later so that the flexible print board for the liquid crystal display panel and the flexible print board for the surface light source device can be integrated.

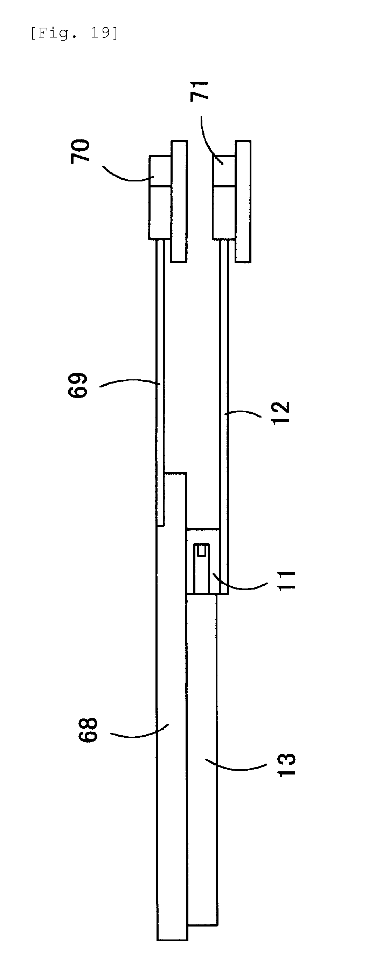

In the prior art, the flexible print board for the liquid crystal display panel was manufactured by a maker of the liquid crystal display panel, and the flexible print board for the surface light source device was manufactured by the maker of the surface light source device. Therefore, as shown in Fig. 19, a flexible print board 69 connected to a liquid crystal display panel 68 and the flexible print board 12 connected to the light emitting part 11 of the surface light source device had to be separately manufactured. Further, a control circuit 70 for the liquid crystal display panel and a control circuit 71 for the surface light source device were also separately manufactured.

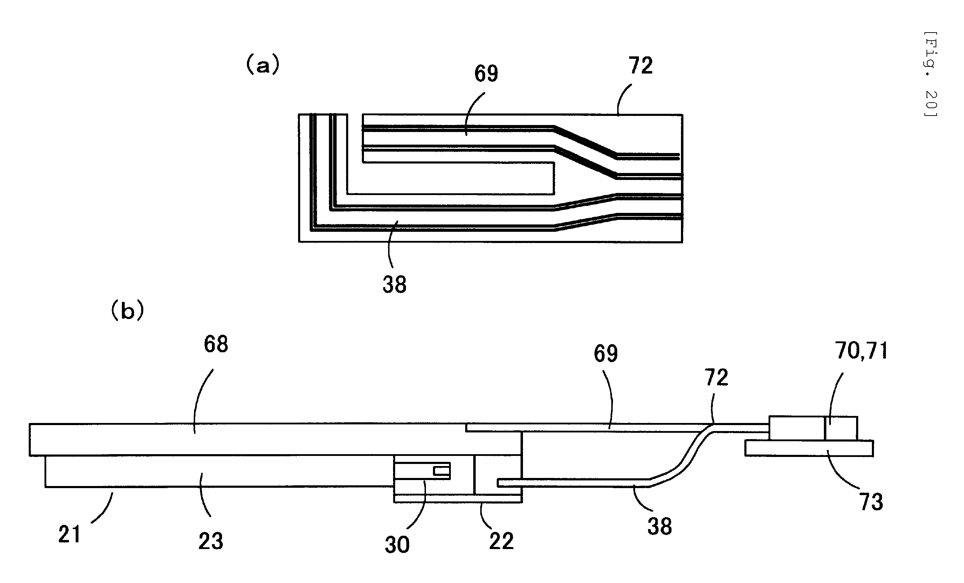

In contrast to this, when the light source module 22 of the invention is used, the flexible print board 38 of the surface light source device 21 can be supplied on the user side. Accordingly, as shown in Fig. 20(a), the flexible print board 69 connected to the liquid crystal display panel 68 and the flexible print board 38 connected to the surface light source device 21 can be constructed by one flexible print board 72. Further, the control circuit 70 for the liquid crystal display panel and the control circuit 71 for the surface light source device can be also collected on one substrate 73.

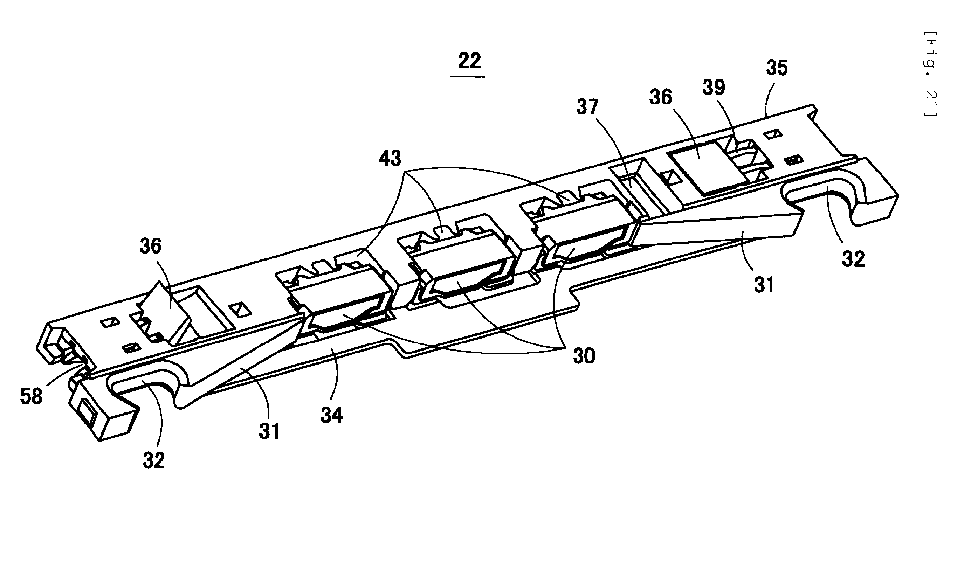

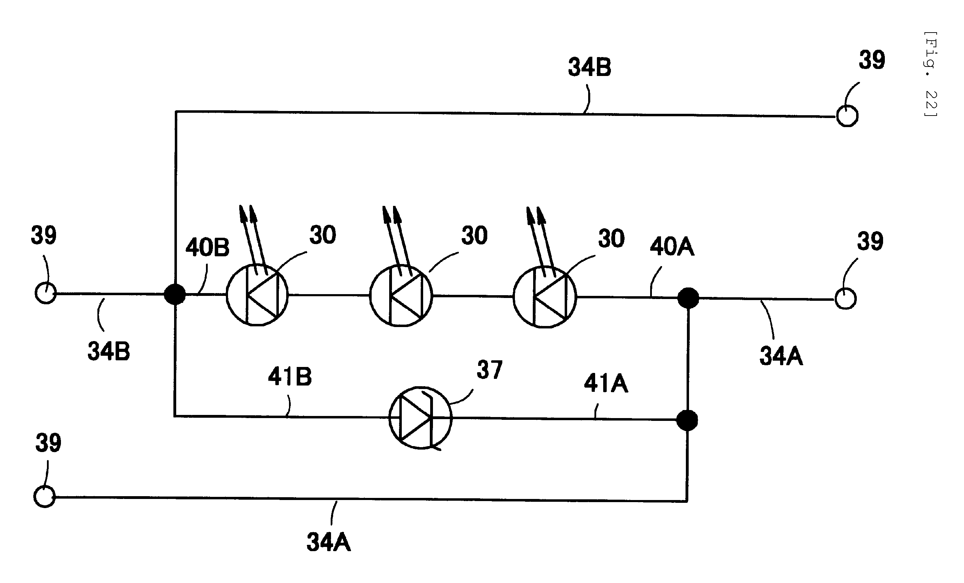

In the above embodiment, one light emitting part 30 is mounted to the light source module 22, but plural light emitting parts 30 may be also mounted to the light source module 22. For example, Fig. 21 shows the light source module 22 in which three light emitting parts 30 are spaced at a constant interval and are mounted. Fig. 22 is a circuit diagram of the light source module 22 of Fig. 21. In Fig. 22, the plural light emitting parts 30 are connected in series, but may be also connected in parallel.

### Embodiment 2

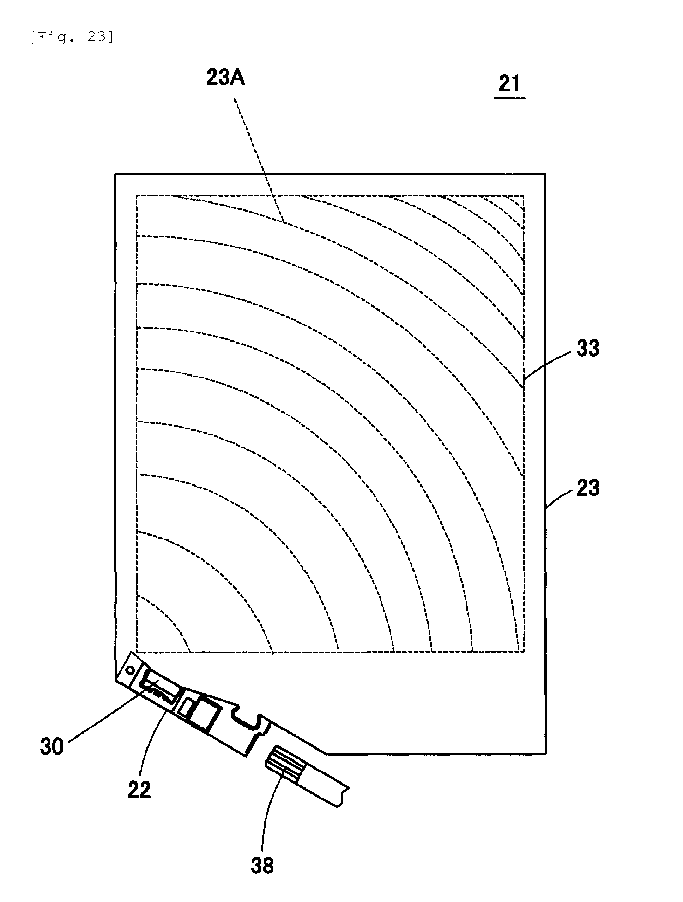

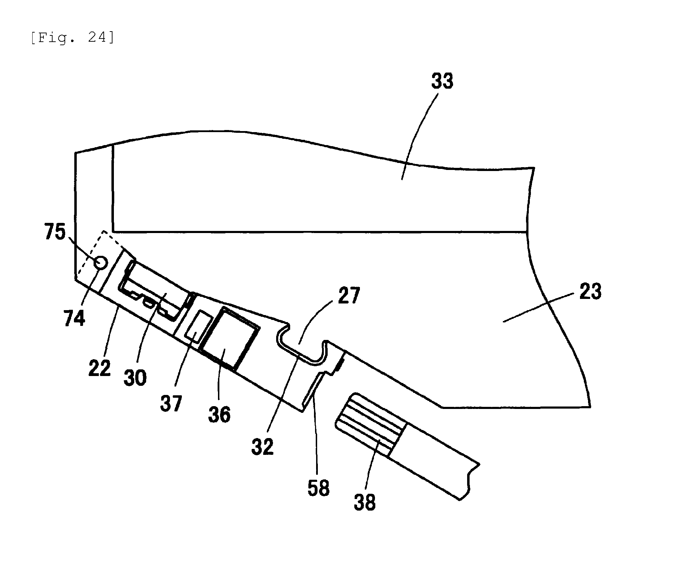

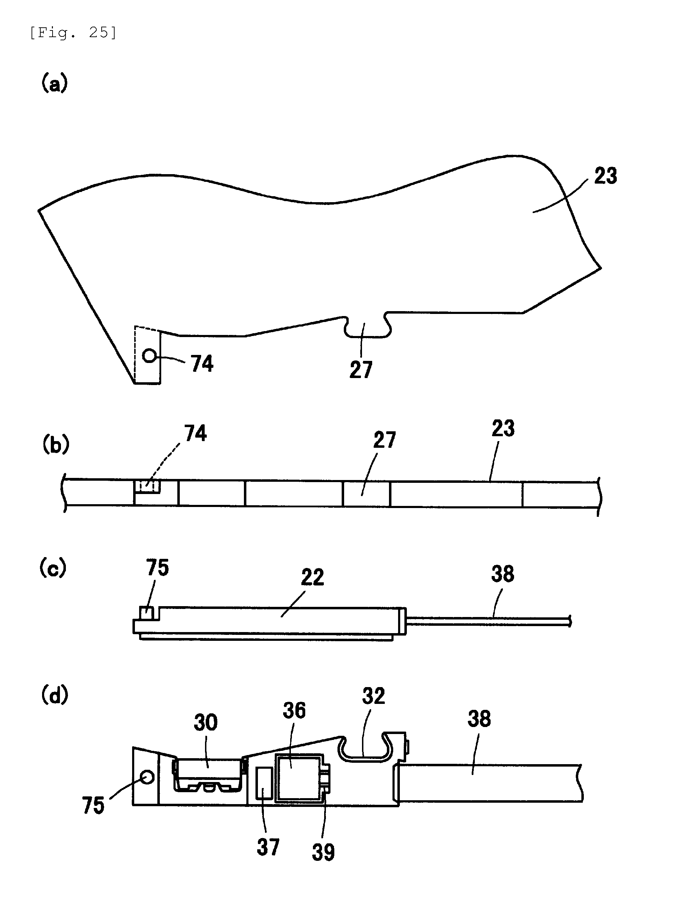

Fig. 23 is a plan view showing a surface light source device 21 in accordance with another embodiment of the present invention. Fig. 24 is a view for enlarging one portion of Fig. 23. Figs. 25(a) and 25(b) are a plan view and a front view showing the vicinity of a light incident portion 28 of the light guide plate 23. Figs. 25(c) and 25(d) are a rear view and a plan view of the light source module 22. In the surface light source device 21 shown in this embodiment, the light source module 22 is arranged near a corner of the light guide plate 23, and light is incident in a diagonal direction of the light guide plate 23 from the light emitting part 30.

As shown in Figs. 25(a) and 25(b), the light incident portion 28 formed in a trapezoidal shape is arranged near a corner of the light guide plate 23, and a connected portion 27 is adjacent to the light incident portion 28 and is projected on one side of this light incident portion 28. A hole 74 for connection is bored on the other side of the light incident portion 28, and the rear face side of a portion for boring the hole 74 for connection is notched so that the thickness of the plate is thinned.

On the other hand, in the light source module 22, as shown in Figs. 25 (c) and 25 (d), the light emitting part 30 is stored in a position opposed to a central portion of the connected portion 27, and a pushing-against portion 31 having an inclined front face is arranged on each of both sides of the light emitting part 30. In a position opposed to the hole 74 for connection in the light guide plate 23, the upper face of an end portion of the housing 35 is notched so that the thickness of the plate is thinned. A shaft 75 for connection is raised on this upper face. Further, in a position opposed to the connected portion 27 of the light guide plate 23, a connecting portion 32 is arranged in the housing 35, and a connector 39, a connector knob 36, a substrate insertion port 58, etc. are arranged on only an arranging side of the connecting portion 32.

The shaft 75 for connection in the light source module 22 is inserted into the hole 74 for connection in the light guide plate 23 from the downward direction, and the connected portion 27 of the light guide plate 23 is fitted to the connecting portion 32 of the light source module 22 from the upward direction. As shown in Fig. 24, the light source module 22 is fixed to a corner portion of the light guide plate 23. The flexible print board 38 is inserted into the light source module 22 from the substrate insertion port 58, and is connected to the connector 39.

### Embodiment 3

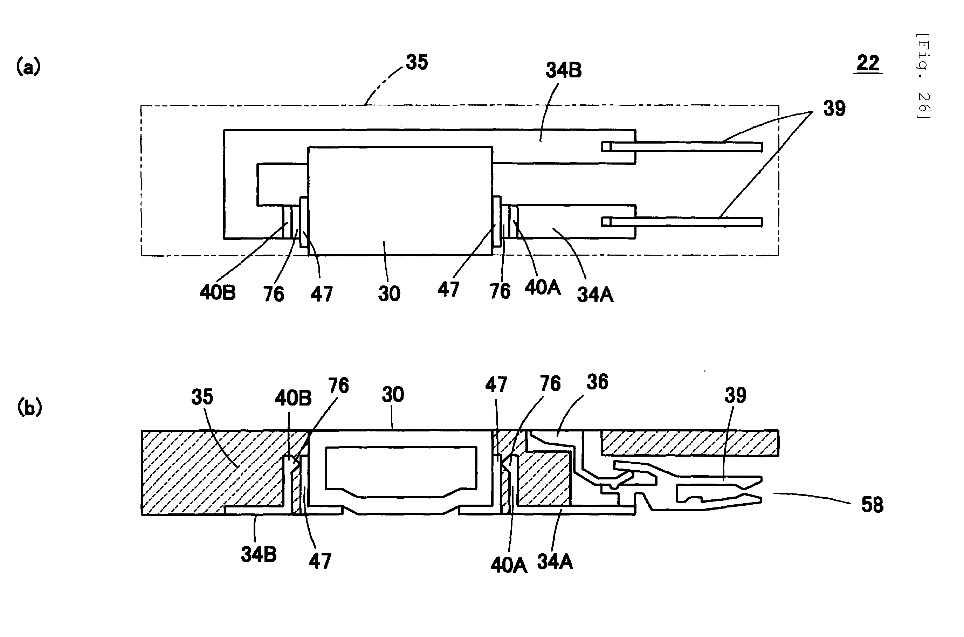

Fig. 26 (a) is a schematic plan view showing the internal structure of a light source module 22 in accordance with still another embodiment of the present invention. Fig. 26(b) is a schematic sectional view of this light source module 22. In this embodiment, the light emitting part 30 is insert-molded into the light source module 22.

A connector 39 is arranged in one end portion of contact parts 34A, and a light emitting part mounting portion 40A is perpendicularly raised in the other end portion. A contact 76 is arranged at a tip of the light emitting part mounting portion 40A. Similarly, a connector 39 is arranged in one end portion of contact parts 34B, and a light emitting part mounting portion 40B is perpendicularly raised in the other end portion. A contact 76 is arranged at a tip of the light emitting part mounting portion 40B. The connector 39 of the contact parts 34A and the connector 39 of the contact parts 34B are arranged in parallel within the substrate insertion port 58. The light emitting part mounting portion 40A of the contact parts 34A and the light emitting part mounting portion 40B of the contact parts 34B are spaced at a clearance slightly smaller than the width of the light emitting part 30, and are opposed to each other. The light emitting part 30 is press-fitted between the light emitting part mounting portions 40A, 40B. The contact 76 of the light emitting part mounting portion 40A comes in press contact with one external terminal 47 of the light emitting part 30. The contact 76 of the light emitting part mounting portion 40B comes in press contact with the other external terminal 47 of the light emitting part 30.

Here, the light emitting part 30 does not ride on the contact 34 as in the first embodiment, but is fitted between the light emitting part mounting portions 40A and 40B. A lower face of the light emitting part 30 and lower faces of the contact parts 34A, 34B are located on the same horizontal face. While this state is held, the light emitting part 30 and the contact parts 34A, 34B are set into a die for housing molding, and are inserted into resin of the housing 35. The housing 35 is molded at the same height as the height of the light emitting part 30, and the upper face and the lower face of the light emitting part 30 are exposed from the housing 35.

In the conventional example, the height of the light source module is set to
height of the light emitting part 11 + thickness of solder + thickness of the flexible print board 12. However, in accordance with this embodiment,
height of the light source module 22 = height of the light emitting part 30
is set. Accordingly, the light source module 22 can be made thin. For example, if the height of the light emitting part is set to 0.6 to 1.0 mm, and the thickness of solder is set to 0.05 mm, and the thickness of the flexible print board is set to 0.1 to 0.15 mm, the height of the light source module 22 of this embodiment can be reduced by about 15 %.

In this embodiment, the light emitting part mounting portions 40A, 40B come in elastic contact with the external terminal 47 by their contact structure and are merely electrically conducted to the external terminal 47. However, resin also goes round between the light emitting part mounting portions 40A, 40B and the light emitting part 30 by insert-molding into the housing 35 so that no influence of external force is easily exerted. Accordingly, the fear that the electric contact of the light emitting part mounting portions 40A, 40B and the external terminal 47 becomes unstable is small.

In Figs. 26 (a) and 26 (b), the connecting portion 32 and the connected portion 27 for attaching the light source module 22 to the light guide plate 23, etc. are omitted. Further, the connector 39 is arranged on only one side, but may be also arranged on both sides.

### Embodiment 4

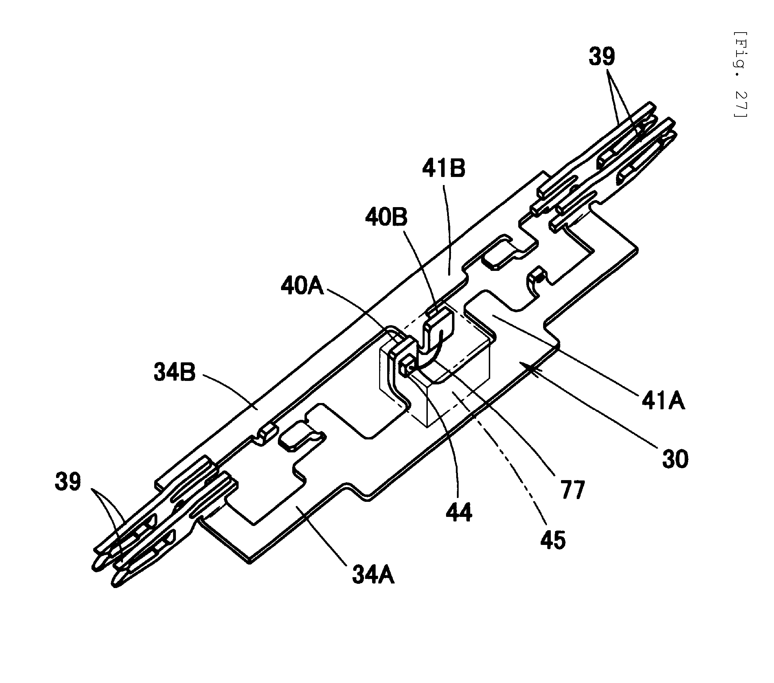

Fig. 27 shows still another embodiment of the invention for directly mounting a light emitting element 44 to a contact 34. In this embodiment, each of light emitting part mounting portions 40A, 40B of contact parts 34A, 34B is perpendicularly raised. The light emitting element 44 (bear chip) such as an LED of a face light emitting type, etc. is die-bonded to a front face of one light emitting part mounting portion 40A. The light emitting element 44 and the light emitting part mounting portion 40B are connected by a bonding wire 77. The light emitting element 44 is sealed within a transparent resin portion 45 together with the light emitting part mounting portions 40A, 40B and the bonding wire 77, and the light emitting part 30 is made integrally with the contact 34. Further, the housing 35 is integrally molded by opaque resin on the contact 34 so as to expose a front face of the transparent resin portion 45 so that the light source module 22 is manufactured.

## Claims

1. A light source module comprising a light emitting element for emitting light and supplying this light to a light guide plate,
the light source module further comprising:
a connector for connecting a wiring member; and an electrically conductive base for conducting the connector and the light emitting element.

2. The light source module according to claim 1, wherein the light emitting element is stored into a light emitting part, and the light emitting part is mounted to the electrically conductive base.

3. The light source module according to claim 2, wherein the light emitting part is mounted onto a light emitting part mounting portion arranged in the electrically conductive base, and a light emitting part placing face of the light emitting part mounting portion is concavely arranged.

4. The light source module according to claim 2, wherein the light emitting part and the electrically conductive base are connected on a side face of the light emitting part.

5. The light source module according to claim 2, wherein the light emitting part is insert-molded within a housing manufactured by synthetic resin.

6. The light source module according to claim 1, wherein the light emitting element is mounted onto the electrically conductive base, and is insert-molded within a housing manufactured by synthetic resin.

7. The light source module according to claim 6, wherein the light emitting element is sealed and molded within a transparent resin portion, and is then insert-molded within the housing.

8. The light source module according to claim 1, wherein the wiring member connected to the connector can be released.

9. The light source module according to claim 2, wherein a light emitting part storing portion for storing the light emitting part is arranged, and a positioning face for positioning forward and backward directions of the light emitting part by abutting one portion of a front face of the light emitting part is arranged within the light emitting part storing portion.

10. A surface light source device comprising:
the light source module according to claim 1; and
a light guide plate for introducing light emitted from the light source module from a light incident face, and spreading this light in a face shape, and emitting this light from a light emitting face.

11. The surface light source device according to claim 10, wherein a connecting portion is arranged in the light source module, and a connected portion connected to the connecting portion is arranged in the light guide plate, and the light source module is fixed to the light guide plate by connecting the connecting portion and the connected portion.

12. The surface light source device according to claim 11, wherein positioning means for mutually positioning the light source module and the light guide plate is arranged.

13. The surface light source device according to claim 12, wherein the distance between the light emitting face of the light source module fixed to the light guide plate and the light incident face of the light guide plate is 0.05 mm or less.

14. The surface light source device according to claim 10, wherein the light guide plate has a pattern for emitting light from the light emitting face by reflecting light internally guided, and the pattern is arranged on a concentric circle with a certain point as a center.
